# EUROPEAN PATENT SPECIFICATION

(11) **EP 2 018 512 B1**
(45) Date of publication and mention of the grant of the patent: **21.04.2010**
(21) Application number: 07747281.9
(22) Date of filing: 12.04.2007
(51) Int. Cl.: G01B 7/012, G01B 5/012

(54) **MEASURING SCANNING PROBE FOR SCANNING THE SURFACE TO BE MEASURED**
MESSABTASTSONDE ZUM ABTASTEN EINER ZU MESSENDEN OBERFLÄCHE
SONDE DE MESURE PAR BALAYAGE UTILISEE POUR BALAYER UNE SURFACE A MESURER

(30) Priority: 12.04.2006 NL 1031573
(43) Date of publication of application: 28.01.2009
(73) Proprietor: Technische Universiteit Eindhoven, 5612 AZ Eindhoven (NL)
(72) Inventor: BOS, Edwin, Johannes, Cornelis, NL-5551 MX Dommelen (NL); BURGER, Gerardus, Johannes, NL-7556 TX Hengelo (NL)
(74) Representative: DeltaPatents B.V.
(86) International application number: PCT/NL2007/000099
(87) International publication number: WO 2007/117138

(56) References cited:
- EP-A- 0 501 710
- EP-A- 0 897 100
- NL-C2- 1 010 894
- US-A- 5 625 957
- US-A1- 2002 005 062
- US-A1- 2003 066 354
- US-B1- 6 327 789
- PATENT ABSTRACTS OF JAPAN vol. 2000, no. 21, 3 August 2001 (2001-08-03) -& JP 2001 091206 A (MITSUTOYO CORP), 6 April 2001 (2001-04-06)

## Description

### Field of the invention

The present invention relates to a measuring scanning probe of the static type for scanning a surface to be measured, comprising a stylus so as to provide a measuring point at a first end of the stylus for scanning the surface to be measured, and a base part that is to be fixedly connected to a scanning device, the stylus being movably suspended from the base part by means of one or more bending elements.

### Background of the invention

Measuring elements for mapping surfaces can be subdivided into measuring elements of the contactless type and measuring elements of the contact type. The measuring elements of the contact type may further be subdivided into scanning probes and touch trigger probes. Scanning probes scan a surface to be measured and can provide an insight in the shape of the surface and, for example, the height and depth of structures and irregularities of a surface. Touch trigger probes only provide a signal when contact is made with a surface but do not directly provide an insight in, for example, the height and depth of a structure.

Scanning probes can further be subdivided into scanning probes of the vibrating type and scanning probes of the static or non-vibrating type. Scanning probes of the static type are formed by a stylus with which a surface is scanned such that during measurement operation there will always be contact with the surface being scanned. Scanning probes of the vibrating type typically operate on the basis of a vibration imposed on the stylus, wherein deviations of this vibration of the stylus indicate the extent to which the diversion of the stylus is limited by structures near the stylus. The operation of scanning probes of the vibrating type thus differs fundamentally from that of static scanning probes, which is reflected in the technical requirements and the design thereof. The present description relates to measuring elements of the contact type, and more in particular to scanning probes of the static type:

Such scanning probes are known and are used for scanning surfaces to be measured, for example for mapping the three-dimensional shape of the surface to be measured or, for example, for determining material properties such as the mechanical stiffness of an object. In a scanning probe of the prior art, the measuring point is brought in contact with the surface to be measured, and the scanning probe is moved relative to the surface so as to scan the surface. The moment the measuring point encounters, for example, an unevenness on the surface, the measuring point will experience a resistance in its scanning of the surface and, subject to the situation, a force will be exerted on the measuring point.

Since the measuring point is fastened to the end of a stylus, and the stylus in its turn is suspended from a fixed base part, a torque will be applied across the stylus. The stylus is suspended from the base part by means of bending elements, and the torque across the stylus will cause the bending elements to bend, from which the diversion of the measuring point at the end of the stylus as well as the force exerted on the measuring point can be determined. Information can be derived from this on, for example, the shape of the surface or on other physical parameters such as, for example, the elastic properties of the surface, its stiffness, and the like.

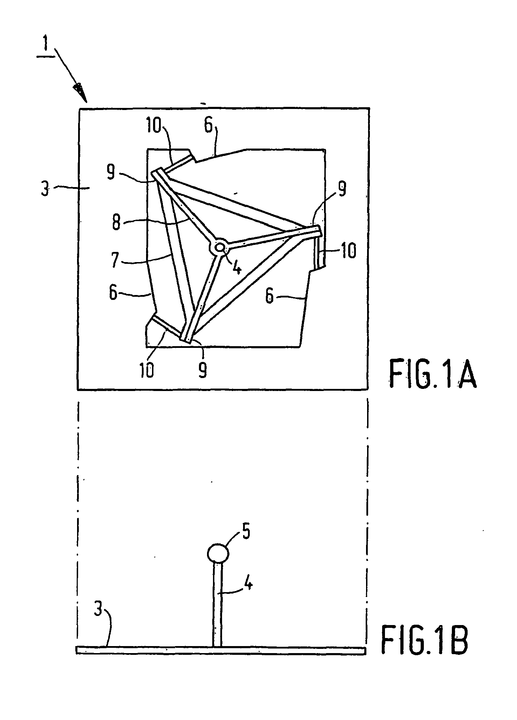

A measuring scanning probe according to the prior art is disclosed, for example, in the Dutch patent no. NL 1 010 894 in the name of the Technische Universiteit Eindhoven. The scanning probe described in this document is diagrammatically depicted in figures 1A and 1B. Figure 1A is a plan view of the probe, figure 1B a side elevation of the same probe.

The scanning probe 1 described above consists of a base part 3 and a stylus 4. A measuring point 5, for example in the shape of a ball or bullet, is present at the end of the stylus 4. The stylus 4 is suspended from the base part 3 by means of a flexible construction. Said flexible construction consists of an auxiliary body 8 that is connected to the other end of the stylus 4. The auxiliary body 8 comprises a fixing point for the stylus 4 and three arms that extend radially away from the fixing point. The ends of the radially extending arms are connected to a further auxiliary body 7 that consists of three arms that together form an isosceles triangle. The ends of the arms of the auxiliary body 8 are fastened to the corner points of the auxiliary body 7. The corner points of the auxiliary body 7 constitute three junctures 9.

The base part 3 is mainly a framework of which the inner portion has been cut out. The edges along the inner portion comprise suitably shaped projected parts 6. The junctures of the auxiliary body 7 and the projected parts 6 of the base part 3 are arranged in the plane of the base part 3 opposite one another and are connected to three blade springs 10 that together form the interconnections between the auxiliary body 7 and the base part 3.

The measuring point 5 is flexibly movable in three degrees of freedom. A movement in each of the degrees of freedom of the measuring point 5 can be accurately measured through measurement of the deformation of each of the blade springs 10. It can be derived from the deformation of each of the blade springs 10 in particular what the extend of the diversion of the measuring point 5 is in each of the degrees of freedom.

A disadvantage of the measuring scanning probe shown in the figures 1A and 1B is that its manufacture is labor intensive and complicated, which considerably increases the production cost of a probe such as the one shown in the figures 1A and 1B. This is a general problem with measuring scanning probes of the prior art. It is readily apparent from the example shown in the figures 1A and 1B that the stylus 4 is to be very accurately aligned when fastened on the auxiliary body 8 so as to make an accurate measurement of the diversion of the probe possible. Any inaccuracy in the alignment of the stylus 4 relative to the auxiliary bodies 7 and 8 and the base part 3 will directly lead to an inaccuracy in the determination of the place and position of the measuring point 5, and thus to an inaccuracy of the scanning probe as a whole. This implies furthermore that the alignment of each of the elements used, i.e. not only the stylus 4 but also the auxiliary bodies 7 and 8, the blade springs 10, and the base part 3 relative to one another should take place with high accuracy. Since the dimensions of the probe shown in the figures 1A and 1B are of the order of magnitude of tenths of a millimeter, it will be immediately apparent to those skilled in the art that assembling a probe as shown in the figures 1A and 1B and aligning the various components is extremely difficult and time-consuming. This renders the manufacturing process not only slow, but also expensive.

A further specific disadvantage of the measuring scanning probe shown in the figures 1A and 1B is that a parasitic translation of the blade springs, when these are given a diversion in a direction away from the paper, will cause the stylus with the measuring point to perform a rotation about the axis of the stylus 4 when the latter is moved in vertical direction. If said diversion is limited only to the vertical direction, then this rotary movement does not pose a big problem. However, if in addition to the movement away from the paper, i.e. along the axis of the stylus, there is also a diversion of the measuring point parallel to the paper, then the rotary movement performed by the stylus as a result of the movement of the stylus in the direction of the stylus axis will constitute a deviation in the localization of the measuring point.

The above disadvantages demonstrate that the applicability, sensitivity, and accuracy of the scanning probe are largely determined by the design thereof. Scanning probes of this type are designed to measure torques. These should accordingly be readily measurable in all relevant degrees of freedom, which does not make the designing of scanning probes an easy matter.

It is an object of the present invention to provide a measuring scanning probe for scanning a surface to be measured in which the above disadvantages have been eliminated, which can be inexpensively manufactured in a simple manner, and with which a diversion of the measuring point can be accurately determined in all degrees of freedom.

According to the invention, these and other objects are achieved by means of a measuring scanning probe for scanning a surface to be measured, comprising a stylus so as to provide a measuring point at a first end of the stylus for scanning the surface to be measured, and a base part that is to be fixedly connected to a scanning device, the stylus being movably suspended from the base part by means of one or more bending elements, **characterized in that** the measuring scanning probe is substantially planar in shape, the stylus, the one or more bending elements, and the base part being located in a single main plane of the planar measuring scanning probe.

Since the measuring scanning probe is substantially planar in shape in accordance with the invention, and the components of the probe (in particular the bending elements, the base part, and the stylus) are all arranged in the main plane of the planar probe, it is much easier to align the components with one another, which considerably simplifies the manufacture of the scanning probe according to the present invention. Assume that, for example, separate components are used in the manufacture of the probe, and that a stylus having a measuring point or measuring ball is suspended from a base part by means of bending elements. Assume further that these components are all located in the main plane of the planar scanning probe, then it will be possible to align all these components relative to one another in that, for example, assembly takes place on a planar support surface. In any case, one of the degrees of freedom will then be eliminated in the alignment of the components. At the same time it is possible to use a jig or similar aids in the manufacture of the scanning probe, in particular for the alignment of the various components thereof.

In a preferred embodiment of the invention, the stylus, the base part, and the one or more bending elements are manufactured from a planar plate.

It thus becomes possible, for example, to manufacture the scanning probe according to the invention by means of an etching process. As will be apparent to those skilled in the art, an even higher accuracy can be achieved thereby, and the necessity of fastening individual components to one another during manufacture is removed. The scanning probe can be directly obtained through etching, which again enhances the ease of manufacture and reduces the manufacturing cost accordingly.

It is further noted that the manufacture of the scanning probe in an etching process is made possible only by the fact that the scanning probe has a substantially planar shape, and all critical components (the stylus, the bending elements, and the base part) are located in a single main plane, as described above. If this would not be the case, as in the prior art, then it would be necessary to manufacture those components that are not arranged in the main plane separately, and to join them together, which necessitates an alignment of these components with respect to one another.

According to a further embodiment of the invention, one or more strain gauges is or are arranged on at least one of the blending elements for determining the deformation of the at least one bending element during operation so as to determine a diversion of the measuring point.

It will be apparent to those skilled in the art that the use of such strain gauges arranged on the bending elements renders the accurate observation of deformations of the bending elements directly possible. The diversion of the measuring point can then be accurately derived from the deformations of the bending elements.

According to a further embodiment of the invention, the one or more strain gauges arranged on the at least one bending element is or are located at a side of the bending element that is parallel to or coincides with the main plane.

What is meant here is that, with the planar scanning probe defining the main plane, the strain gauges on the bending elements can be simply placed directly on the bending elements from the upper or lower side of the main plane. A suitable placement and design of the bending elements renders it possible to place the strain gauges in this manner, which in its turn again simplifies the method of manufacturing scanning probes according to this embodiment.

In a further embodiment of the invention, at least one bending element of the bending elements is formed by a blade spring comprising mutually opposed planar sides and mutually opposed narrow sides and further comprising mutually opposed ends, such that one of the ends is mechanically coupled to the stylus and another one of the ends is mechanically coupled to the base part so as to provide a torque across the ends of the blade spring for deforming the blade spring in the case of a diversion of the stylus, the planar sides of the blade spring being substantially transversely oriented with respect to the main plane.

By placing the blade springs in this embodiment transversely to the main plane, the etching process described above is simplified even further, because the scanning probe thus obtained has the same thickness everywhere and accordingly etching only needs to take place at one depth (in particular, all material that is to be etched should be removed completely), such that a two-dimensional shape without thickness differences is created. As will be explained further below, a measurement of all three degrees of freedom is possible when the blade springs of the scanning probe are arranged in this manner. It is noted in respect of the above, however, that the property of the material and the scanning probe having the same thickness everywhere (or substantially the same thickness) should not be regarded as a restriction of the design. This may be deviated from, if so desired, for specific components. Thus, for example, a stylus may have a small thickness, subject to a designer's choice.

Alternatively, it is possible to place one or more blade springs such that the planar side of the blade spring is parallel to the main plane of the planar scanning probe. The advantages of the invention are still partly realized thereby, but it will be clear to those skilled in the art that the etching of blades with such an orientation is less straightforward, because etching should in this case take place to different depths, depending on location.

According to a further preferred embodiment of the invention, at least one strain gauge of the strain gauges is placed on at least one of said narrow sides for determining said deformation of the blade spring during operation. The inventor has realized that, although the placement of the strain gauges on the planar side may indeed seem the most logical solution, because a deformation of the bending element is most easy to measure there, a diversion of the measuring point relative to the point of equilibrium thereof is also observable as a deformation of the narrow side of the bending element.

To give an example, when a torque directed perpendicularly to the narrow side is applied to the ends of the blade spring, this will cause a measurable deformation of the narrow side. Measuring means, such as a strain gauge, placed on the narrow side will render such a deformation accurately observable. In addition, a deformation of the blade spring arising from a torque applied across the ends of the blade spring, exerted in a direction perpendicular to the planar side, will be observable by suitably placed measuring means (such as strain gauges) on the narrow side of the blade spring.

According to a further embodiment of the invention, at least one first strain gauge of the at least one strain gauge is placed on the at least one narrow side, said at least one first strain gauge being located mainly outside the centerline in longitudinal direction of the narrow side, for determining a deformation of the blade spring in a direction transverse to the planar side of the blade spring.

Deformation of the blade spring under the influence of such a force is particularly well observable when a strain gauge is placed on the narrow side of the blade spring in a location outside the centerline in the longitudinal direction of the narrow side. If the strain gauge were placed on the centerline of the narrow side, it would be compressed on one side under the influence of such a force and would at the same time be stretched at the other side, whereby e.g. a change in resistance or capacitance in the strain gauge would partly cancel itself out. If the strain gauge is placed in a location outside the centerline, or at a distance from the centerline (the 'centerline' here denoting the line running centrally in the longitudinal direction of the planar side), the strain gauge will be either stretched or compressed upon a deformation of the blade spring under the influence of a force perpendicular to the planar side of the blade spring. Such a deformation of the strain gauge can be readily measured.

Although deformations of the blade spring can be well observed with the embodiment described above, a force exerted perpendicularly to the planar side of the blade spring is difficult to distinguish from a force exerted perpendicularly to the narrow side of the blade spring with such an embodiment, since both types of force cause either a stretching or a compression of the strain gauge. In a further embodiment, therefore, at least one first strain gauge is placed on both sides of the centerline of the narrow side for determining the magnitude and direction of the deformation of the blade spring. Owing to the placement of a strain gauge on both sides of the centerline, a force perpendicular to the planar side will stretch one of the strain gauges and compress the other one. When a force is exerted perpendicularly to the narrow side of the blade spring, however, the strain gauges will either both be stretched or both be compressed. A measurement of the resistance change of the two strain gauges thus makes it possible to distinguish a force perpendicular to the planar side from a force perpendicular to the narrow side of the blade spring.

The accuracy of a measurement can be enhanced by means of a further embodiment of the invention, wherein the narrow side has a substantially rectangular shape, and wherein at least one strain gauge is mounted on both sides of the centerline in longitudinal direction of the narrow side thereof, and on both sides of the centerline in the lateral direction of the narrow side thereof, such that at least one strain gauge is located in each quadrant of the narrow side. Such a configuration of strain gauges enables an accurate measurement of the deformation of the blade spring and an accurate determination of the direction of the diversion of the measuring point on the stylus.

According to a further embodiment, at least one second strain gauge is placed on the narrow side for determining a deformation of the blade spring perpendicular to the planar side of the blade spring.

The placement of a second strain gauge on the centerline of the planar side, for example, enables to detect mainly deformations of the blade spring resulting from forces perpendicular to the narrow side with this second strain gauge. In combination with, for example, the previous embodiment in which one or more first strain gauges are arranged in longitudinal direction of the narrow side outside the centerline thereof, a configuration of strain gauges is obtained with which the magnitude and direction of the diversion of the measuring point on the stylus relative to an equilibrium position can be very accurately determined. The 'equilibrium position' here denotes the position of the measuring point relative to the base part when no external forces are exerted on the measuring point or the stylus.

For determining a change in the electrical properties of the strain gauges, the latter may be included, for example, in a Wheatstone bridge. Those skilled in the art are aware that this is a tried and tested method of obtaining an accurate determination of the change in the electrical properties of the strain gauges.

According to a further embodiment of the invention, the strain gauges are electrically connected to measuring means for determining an electrical property of the strain gauges. Such measuring means may comprise, for example, a microprocessor and may be connected to further means for providing further desired functions, such as memories, control means for controlling, for example, a scanning device to which the base part of the measuring scanning probe is fixedly connected, etc.

According to a further embodiment of the invention, the measuring means are connected to control means for determining the magnitude and/or direction of the diversion of the measuring point relative to an equilibrium position thereof.

Furthermore, the stylus of the measuring scanning probe, according to a special embodiment, may be suspended from the base part by means of at least two bending elements for enabling determination of the diversion of the measuring point in three dimensions. It is noted in this connection that it is possible to determine diversions of the measuring point in two directions by means of a single bending element when the strain gauges are placed on only one preferred side of the bending element.

When the strain gauges are placed in at least three groups on two orthogonal sides of a bending element, it is even possible to determine all three degrees of freedom of movement by means of only one bending element. It is noted in this connection, however, that the arrangement of strain gauges on a side of the bending element that is not parallel to the main plane is less straightforward than the arrangement of strain gauges on sides that are parallel to the main plane, so that such a placement of strain gauges adversely affects the manufacturing cost of the scanning probe.

The invention will be explained in more detail below with reference to a few specific preferred embodiments thereof and with reference to the enclosed drawings, in which:
Figures 1A and 1B show a prior art scanning probe;
Figure 2 shows a scanning probe according to an embodiment of the invention;
Figure 3 shows an enlargement of a bending element 20 of the scanning probe according to the embodiment of figure 2; and
Figures 4A and 4B show a scanning element according to a further embodiment of the invention.

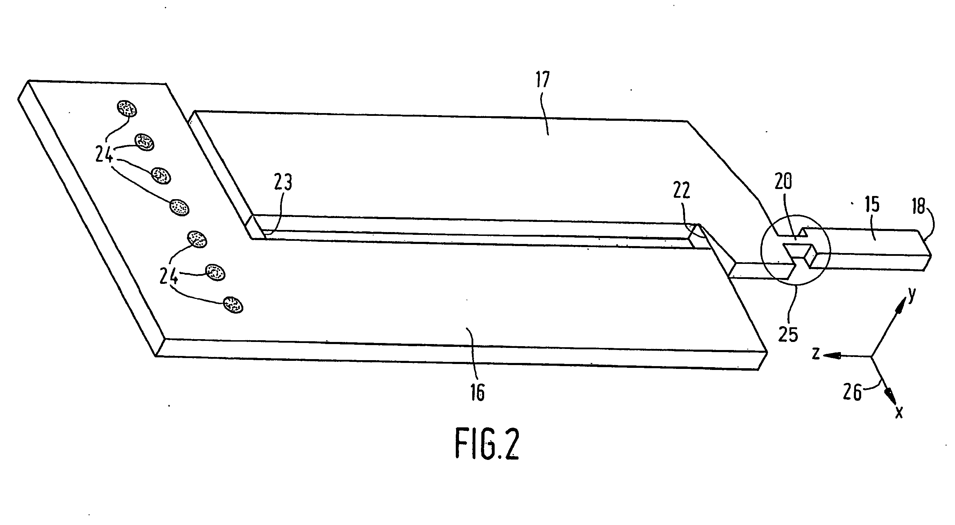

Figure 2 shows a measuring scanning probe according to an embodiment of the present invention. The scanning probe comprises a stylus 15, at an end 18 of which a measuring point (not shown) can be placed, for example having the shape of a ball or bullet. The stylus is suspended from a base part 16 such that the measuring point present at the end 18 can be flexibly moved relative to the base part 16 with three degrees of freedom.

The stylus 15 is suspended by means of an auxiliary body 17, the stylus 15 being joined to the auxiliary body 17 via a bending element 20; while the auxiliary body 17 is connected to the base part 16 via bending elements 22 and 23.

The bending element 20 provides sufficient flexibility for enabling movement the measuring point fixed to the end 18 in two directions relative to the auxiliary body 17. These are the directions perpendicular to the longitudinal axis through the stylus 15 parallel to the x- and y-axis, as indicated in a system of coordinates 26. A suitable material is to be chosen for the bending element in combination with suitably chosen dimensions so as to obtain the desired flexibility. In this respect attention must be paid to the fact that the thickness and height of the bending element (the height of the bending element in this embodiment being equal to the thickness of the planar scanning probe) are to be sufficiently small for giving the bending element the required flexibility.

The bending elements 22 and 23, by which the auxiliary body is suspended from the base part 16, provide the scanning probe with the flexibility that enables the measuring point fastened to the end 18 to be movable relative to the base part 16 in a direction parallel to the z-axis. Again, the choice of material and dimensions of the bending elements 22 and 23 are important for obtaining the desired flexibility of the elements, in the same way as discussed in relation to the bending element 20 above.

The scanning probe should be shaped such that a relative movement of the measuring point connected to the end 18 of the stylus and the forces acting thereon can be accurately determined by the measuring means provided on the bending elements 20, 22 and 23. The bending elements 20 in the embodiment of figure 2 are provided with strain gauges (not shown in figure 2). These strain gauges are connected to electrical contact points 24 for measuring their electrical properties.

When a surface to be investigated is scanned by the measuring scanning probe, the measuring point fastened to the end 18 of the stylus 15 will usually remain permanently in contact with the surface, so that the measuring point on a planar surface will have a diversion that is dependent on the friction between the measuring point and the surface. When the measuring point encounters an unevenness of the surface under investigation, a stronger force will be exerted on the measuring point which results in the measuring point getting a larger diversion relative to its equilibrium position. The equilibrium position here is defined as the orientation and location of the measuring point and the stylus 15 relative to the base part 16 when no external forces are exerted on the measuring point or the stylus.

A force exerted on the measuring point fastened to the end 18 of the stylus 15 resulting in a diversion of the measuring point will cause at least one of the bending elements 20, 22 and 23 to become deformed. When a force is exerted on the measuring point in a direction transverse to the longitudinal axis of the stylus 15, i.e. parallel to the x-axis or the y-axis of the system of coordinates 26, it will be mainly the bending element 20 that changes its shape. This can be measured, for example, by means of one or more strain gauges placed on the bending element 20. When a force is exerted on the measuring point parallel to the longitudinal axis of the stylus 15, however, i.e. parallel to the z-axis of the system of coordinates 26, this will cause a deformation of mainly the bending elements 22 and 23.

The scanning probe shown in figure 2 is shaped such that the forces exerted on the measuring point fastened to the end 18 of the stylus 15 optimally cause a change in shape in at least one of the bending elements. The fact that forces exerted on the measuring point fastened to the end 18 of the stylus 15 can cause not only changes in shape of the intended bending element (20, 22 and/or 23), but also changes in shape in the other bending elements, has also been taken into account in the shaping of the scanning probe of figure 2.

The influence of external forces on the deformation of the individual bending elements 20, 22 and 23 has, as far as this was desired, been uncoupled as much as possible by means of the special design of the scanning probe. In the embodiment of figure 2, for example, the stylus 15 and the bending element 20 are located such that the central axis in longitudinal direction through the stylus also passes through the bending element 20, and that the bending elements 22 and 23 are located in the extended direction of this central axis. When an external force is exerted on the measuring point fastened to the end 18 of the stylus 15, which force is directed parallel to said central axis, this will only lead to a comparatively small deformation of the bending element 20. In the bending elements 22 and 23, however, this deformation will be significantly larger, so that such a force can best be determined by means of the bending elements 22 and 23.

In the embodiment of figure 2, the stylus 15 is fastened to the auxiliary body 17 via a single bending element 20, and the auxiliary body 17 is connected to the base part 16 via two bending elements 22 and 23. Since a force exerted on the measuring point fastened to the end 18, and directed transversely to the central axis through the stylus, causes a torque with respect to the bending elements 22 and 23, two bending elements 22 and 23 were applied in this design so as to compensate for this torque. Those skilled in the art will appreciate, however, that strictly speaking the bending elements 22 and 23 could be replaced by a single bending element, in which case no compensation is provided for said torque.

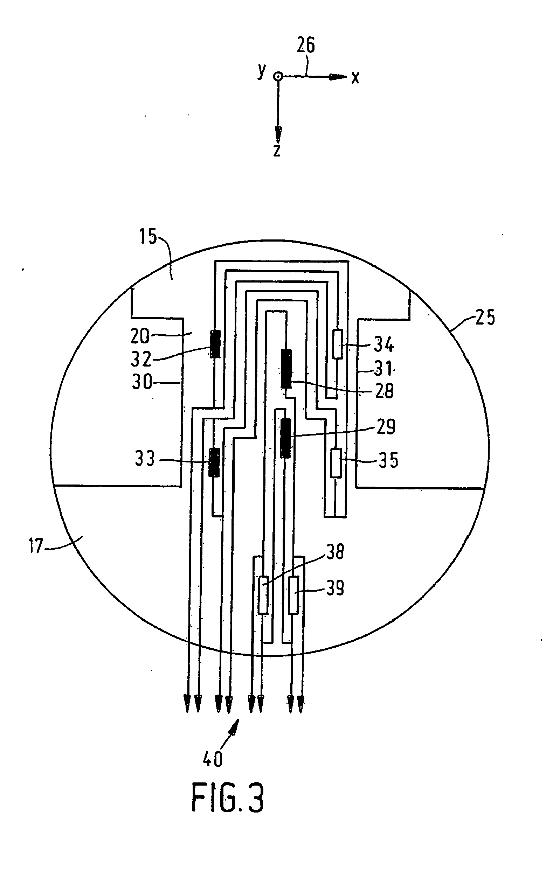

Figure 3 is an enlargement of the bending element 20 of figure 2, showing part of the stylus 15, the bending element 20, and part of the auxiliary element 17. The enlarged portion is referenced 25 in figure 2 (similarly referenced in figure 3). A plurality of strain gauges 28, 29, 32, 33, 34 and 35 are provided on the bending element, on the narrow side thereof (facing upwards in figure 2), which side is parallel to the main plane of the planar scanning probe of figure 2. The strain gauges shown in figure 3 may be roughly divided into two groups, i.e. a first group of strain gauges comprising the strain gauges 32, 33, 34 and 35 and a second group of strain gauges comprising the strain gauges 28 and 29 and secondarily strain gauges 38 and 39, said strain gauges 38 and 39 being located outside the bending element 20 on the auxiliary body 17.

Alternatively, the strain gauges may be placed in a different location outside the bending element 20, for example on the stylus 15. In the embodiment of figure 2, however, the arrangement of the strain gauges 38 and 39 on the auxiliary body 17 (or alternatively on the base body 16) is a convenient choice for practical purposes, because the connection points 24 are on the base part 16 in figure 2. The first group of strain gauges 32, 33, 34 and 35 and the second group of strain gauges 28, 29, 38 and 39 are connected in a Wheatstone bridge configuration. This circuit configuration renders it possible to measure the changes in resistance or other electrical properties of the strain gauges accurately. Capacitive or inductive strain gauges may alternatively be used, in which case the capacitance or inductance will change as the strain gauges are stretched or compressed.

To give an example of the operation of the scanning probe of figure 2, it is assumed that the measuring point fastened to the end 18 in figure 2 is moved in a direction transverse to the central axis through the stylus 15, for example parallel to the x-axis of the system of coordinates shown in figure 2.

The same system of coordinates 26 is shown in figure 3. The bending element 20 as shown in figure 3 will be deformed, for example, such that the side 30 thereof is stretched, whereas the side 31 of the bending element 20 is compressed. As a result, the strain gauges 32 and 33 will also be stretched, whereas the strain gauges 34 and 35 will be compressed. The change in resistance in the strain gauges 32 and 33 is accordingly opposed to the change in resistance in the strain gauges 34 and 35, which can be readily ascertained by means of the Wheatstone circuit of the strain gauges 32, 33, 34 and 35. The magnitude of the resistance changes in the strain gauges 32, 33, 34 and 35 indicates the degree of bending in the x-direction.

When a force parallel to the y-axis (for example in the positive direction thereof) of the system of coordinates 26 is exerted on the measuring point fastened to the end 18 of the stylus 15, all strain gauges 28, 29, 32, 33, 34 and 35, which are placed on the side in view in figure 3, will be compressed, and the resistance value of each of these strain gauges will change accordingly. De measure of this change indicates the magnitude of the diversion in the y-direction.

A movement of the measuring point in the x-direction can be easily distinguished from a movement of the measuring point in the y-direction. A movement in the x-direction causes the strain gauges 32 and 33 to be stretched and the strain gauges 34 and 35 to be simultaneously compressed (or vice versa), whereas a movement in the y-direction causes all strain gauges 32, 33, 34 and 35 to be either compressed or stretched, as applicable. In the second group, however, an diversion in the x-direction will hardly lead to a change in resistance in the strain gauges 28 and 29, because these are placed substantially on the centerline of the bending element. The strain gauges 38 and 39 are required as a complement to the strain gauges 28 and 29 so that the latter can be connected in a Wheatstone bridge configuration.

A diversion of the measuring point at the end 18 of the stylus 15 in the z-direction thereof will cause no or substantially no measurable change in the electrical resistance of the strain gauges 28, 29, 32, 33, 34 and 35.

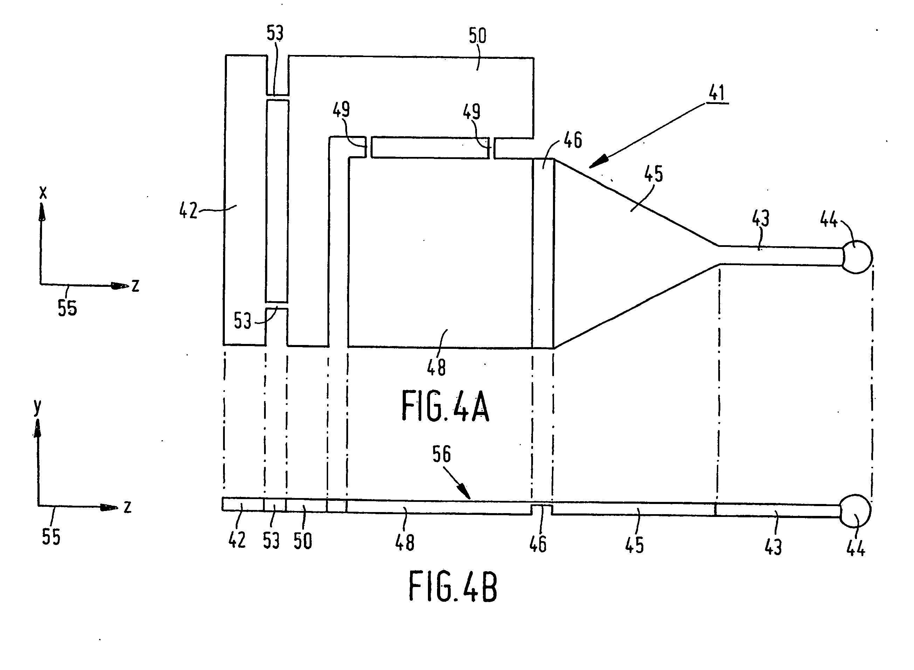

Arrows 40 in figure 4, furthermore, diagrammatically indicate that the connections of the Wheatstone bridge configuration are connected to the contact points 24 shown in figure 2.

Figures 4A and 4B show a further embodiment of a measuring scanning probe according to the invention. Figure 4A shows a base part 42 that is mechanically coupled to a stylus 43. A measuring ball 44 is present at the end of the stylus 43. The stylus 43 merges into an auxiliary body 45 that is connected to an auxiliary body 48 via a blade spring element 46. The auxiliary body 48 is suspended from an L-shaped auxiliary body 50 via two blade springs 49. The longer leg of the L-shaped body 50, which extends parallel to the x-axis, is suspended from the base part 42 by means of two blade springs 52.

Figure 4B shows the same scanning probe in side elevation. The base part 42, blade spring 53, auxiliary body 50, auxiliary body 48, blade spring 46, auxiliary body 45, stylus 43 and measuring ball 44 are again visible in figure 4B.

The operation of the measuring scanning probe as shown in figures 4A and 4B is as follows. A movement parallel to the z-direction as indicated in a system of coordinates 55 causes a measurable deformation of the bending elements 49. A movement of the measuring ball 44 in a direction parallel to the x-axis of the system of coordinates 55 causes a measurable deformation of the bending elements 53. Similarly, a movement of the measuring ball 44 in a direction parallel to the y-axis of the system of coordinates 55 in figure 4B causes a deformation of the blade spring 46.

All strain gauges for determining the deformation of the blade springs 46, 49 and 53 can be placed on the.respective blade springs 46, 49 and 53 on the side thereof, diagrammatically depicted with reference 56 in figure 4B. This means for the blade spring 46 that the strain gauges are placed on the planar side of the blade spring (the side with the largest surface area), whereas on the blade springs 49 and 53 the strain gauges are placed on one of the narrow sides thereof.

It holds for both the embodiment shown in figure 2 and that shown in figures 4A and 4B that they can be integrally manufactured from a plate material, for example by means of an etching process. This simplifies the manufacture of a measuring scanning probe according to the invention considerably, and thus strongly reduces its manufacturing cost.

The embodiment of figure 2 has a fully two-dimensional shape with a certain thickness. The embodiment of figures 4A and 4B is largely two-dimensional, i.e. with the exception of the blade spring 46. The two-dimensional shape of figure 2 can be integrally manufactured in a very straightforward manner in an etching process. This is also largely valid for the embodiment shown in figures 4A and 4B, the difference being that for obtaining the blade spring 46 the material should be etched away to a thickness smaller than the thickness of the plate.

The embodiments shown in the figures serve purely for illustration of the scanning probe of the present invention. The scope of the invention is limited exclusively by the appended claims. It will be understood that the embodiments shown and described should accordingly not be regarded as limiting the invention in any way; they only serve to illustrate and clarify the concept taught herein.

## Claims

1. A measuring scanning probe of the static type for scanning a surface to be measured, comprising a stylus (15) so as to provide a measuring point at a first end (18) of the stylus for scanning the surface to be measured, and a base part (16) that is to be fixedly connected to a scanning device, said stylus (15) being movably suspended from the base part (16) by means of one or more bending elements (20, 22, 23), **characterized in that** the measuring scanning probe is substantially planar in shape, the stylus, the one or more bending elements, and the base part being located in a single main plane of the planar measuring scanning probe.

2. A probe according to claim 1, wherein the stylus, the base part, and the one or more bending elements are manufactured from a planar plate.

3. A probe according to one of the preceding claims, wherein one or more strain gauges are arranged on at least one of the bending elements for determining the deformation of the at least one bending element during operation so as to determine a diversion of the measuring point.

4. A probe according to claim 3, wherein the one or more strain gauges arranged on the at least one bending element are located at a side of the bending element that is parallel to, or coincides with, the main surface.

5. A probe according to one of the preceding claims, wherein at least one bending element of the bending elements is formed by a blade spring comprising mutually opposed planar sides and mutually opposed narrow sides and further comprising mutually opposed ends, such that one of the ends is mechanically coupled to the stylus and another one of the ends is mechanically coupled to the base part so as to provide a torque across the ends of the blade spring for deforming the blade spring in the case of a diversion of the stylus, the planar sides of the blade spring being substantially transversely oriented with respect to the main plane.

6. A probe according to claim 5 and at least one of the claims 3 and 4, wherein at least one strain gauge of the strain gauges is placed on at least one of said narrow sides for determining said deformation of the blade spring during operation.

7. A probe according to claim 6, wherein at least one first strain gauge of the at least one strain gauge is placed on the at least one narrow side, said at least one first strain gauge being located mainly outside the centerline in longitudinal direction of the narrow side, for determining a deformation of the blade spring in a direction transverse to the planar side of the blade spring.

8. A probe according to claim 7, wherein at least one first strain gauge is placed on both sides of the centerline of the narrow side for determining the magnitude and direction of the deformation of the blade spring.

9. A probe according to claim 8, wherein the narrow side has a substantially rectangular shape, and wherein at least one strain gauge is mounted on both sides of the centerline in a longitudinal direction of the narrow side thereof, and on both sides of the centerline in the lateral direction of the narrow side thereof, such that at least one strain gauge is located in each quadrant of the narrow side.

10. A probe according to one of the claims 6 to 9, wherein at least one second strain gauge is placed on the narrow side for determining a deformation of the blade spring in a direction perpendicular to the planar side of the blade spring.

11. A probe according to one of the claims 3 to 10, wherein at least one of the strain gauges is included in a Wheatstone bridge.

12. A probe according to one of the preceding claims, wherein the strain gauges are electrically connected to measuring means for determining an electrical property of the strain gauges.

13. A probe according to claim 12, wherein the measuring means are connected to control means for determining the magnitude and/or direction of the diversion of the measuring point relative to an equilibrium position thereof.

14. A probe according to one of the preceding claims, wherein the stylus is suspended from the base part by means of at least two bending elements for enabling determination of the diversion of the measuring point in three dimensions.

## Patentansprüche

1. Messabtastsonde der statischen Art zum Abtasten einer zu messenden Oberfläche, umfassend einen Stift (15), um einen Messpunkt an einem ersten Ende (18) des Stiftes zum Abtasten der zu messenden Oberfläche bereitzustellen, und einen unteren Teil (16), der fest mit einer Abtastvorrichtung verbunden werden muss wobei der Stift (15) beweglich am unteren Teil (16) mithilfe eines oder mehrerer Biegeelemente (20, 22, 23) aufgehängt ist, **dadurch gekennzeichnet, dass** die Messabtastsonde im Wesentlichen eine ebene Form aufweist, wobei sich der Stift, das eine oder die mehreren Biegelemente und der untere Teil in einer einzigen Hauptebene der ebenen Messabtastsonde befinden.

2. Sonde nach Anspruch 1, wobei der Stift, der untere Teil und das eine oder die mehreren Biegelemente aus einer ebenen Platte hergestellt sind.

3. Sonde nach einem der vorhergehenden Ansprüche, wobei ein oder mehrere Dehnungsmesser auf mindestens einem der Biegeelemente angeordnet sind, um die Verformung des mindestens einen Biegeelements während des Betriebs zu bestimmen, um eine Abweichung des Messpunktes zu bestimmen.

4. Sonde nach Anspruch 3, wobei der eine oder mehrere Dehnungsmesser, der/die auf dem mindestens einen Biegeelement angeordnet ist/sind, sich an einer Seite des Biegelements befindet/befinden, die parallel zur Hauptoberfläche ist oder damit zusammenfällt.

5. Sonde nach einem der vorhergehenden Ansprüche, wobei mindestens ein Biegelement der Biegelemente von einer Blattfeder gebildet ist, umfassend einander gegenüber liegende ebene Seiten und einander gegenüber liegende schmale Seiten und weiter umfassend einander gegenüber liegende Enden, so dass eines der Enden mechanisch mit dem Stift gekoppelt ist und ein anderes der Enden mechanisch mit dem unteren Teil gekoppelt ist, um ein Drehmoment auf den Enden der Blattfeder bereitzustellen, um die Blattfeder im Fall einer Abweichung des Stiftes zu verformen, wobei die ebenen Seiten der Blattfeder hinsichtlich der Hauptebene im Wesentlichen quer ausgerichtet sind.

6. Sonde nach Anspruch 5 und mindestens einem der Ansprüche 3 und 4, wobei mindestens ein Dehnungsmesser der Dehnungsmesser auf mindestens einer der schmalen Seiten angebracht ist, um die Verformung der Blattfeder während des Betriebs zu bestimmen.

7. Sonde nach Anspruch 6, wobei mindestens ein erster Dehnungsmesser des mindestens einen Dehnungsmessers auf der mindestens einen schmalen Seite angebracht ist, wobei der mindestens eine erste Dehnungsmesser hauptsächlich außerhalb der Mittellinie in Längsrichtung der schmalen Seite angebracht ist, um eine Verformung der Blattfeder in einer Querrichtung zur ebenen Seite der Blattfeder zu bestimmen.

8. Sonde nach Anspruch 7, wobei mindestens ein erster Dehnungsmesser auf beiden Seiten der Mittellinie der schmalen Seite angebracht ist, um die Größe und die Richtung der Verformung der Blattfeder zu bestimmen.

9. Sonde nach Anspruch 8, wobei die schmale Seite eine im Wesentlichen rechtwinklige Form aufweist, und wobei mindestens ein Dehnungsmesser auf beiden Seiten der Mittellinie in einer Längsrichtung der schmalen Seite davon und auf beiden Seiten der Mittellinie in der Querrichtung der schmalen Seite davon angebracht ist, sodass sich mindestens ein Dehnungsmesser in jedem Quadranten der schmalen Seite befindet.

10. Sonde nach einem der Ansprüche 6 bis 9, wobei mindestens ein zweiter Dehnungsmesser auf der schmalen Seite angebracht ist, um eine Verformung der Blattfeder in einer senkrechten Richtung zur ebenen Seite der Blattfeder zu bestimmen.

11. Sonde nach einem der Ansprüche 3 bis 10, wobei mindestens einer der Dehnungsmesser in einer Wheatstone Brücke eingeschlossen ist.

12. Sonde nach einem der vorhergehenden Ansprüche, wobei die Dehnungsmesser elektrisch mit Messmitteln verbunden sind, um eine elektrische Eigenschaft der Dehnungsmesser zu bestimmen.

13. Sonde nach Anspruch 12, wobei die Messmittel mit Steuermitteln verbunden sind, um die Größe und/oder die Richtung der Abweichung des Messpunktes bezüglich einer Gleichgewichtslage davon zu bestimmen

14. Sonde nach einem der vorhergehenden Ansprüche, wobei der Stift am unteren Teil mithilfe von mindestens zwei Biegeelementen aufgehängt ist, um die Bestimmung der Abweichung des Messpunktes in drei Dimensionen zu ermöglichen.

## Revendications

1. Sonde de mesure par balayage de type statique utilisée pour balayer une surface à mesurer, comprenant un pointeur (15) destiné à fournir un point de mesure à une première extrémité (18) du pointeur pour balayer la surface à mesurer, et une embase (16) destinée à être reliée fixement à un dispositif de balayage, ledit pointeur (15) étant suspendu de manière mobile à l'embase (16) au moyen d'un ou plusieurs éléments flexibles (20, 22, 23), **caractérisée en ce que** la sonde de mesure par balayage a une forme sensiblement plane, le pointeur, le ou les éléments flexibles et l'embase étant situés dans un plan principal unique de la sonde de mesure par balayage plane.

2. Sonde selon la revendication 1, dans laquelle le pointeur, l'embase et le ou les éléments flexibles sont fabriqués à partir d'une plaque plane.

3. Sonde selon l'une des revendications précédentes, dans laquelle une ou plusieurs jauges de contrainte sont disposées sur l'un au moins des éléments flexibles afin de déterminer la déformation dudit au moins un élément flexible en fonctionnement et déterminer ainsi une déviation du point de mesure.

4. Sonde selon la revendication 3, dans laquelle la ou les jauges de contrainte disposées sur ledit au moins un élément flexible sont situées sur un côté de l'élément flexible qui est parallèle à, ou coïncide avec, la surface principale.

5. Sonde selon l'une des revendications précédentes, dans laquelle l'un au moins des éléments flexibles est formé par un ressort à lame comprenant des faces planes mutuellement opposées et des faces étroites mutuellement opposées, et comprenant en plus des extrémités mutuellement opposées telles que l'une des extrémités est couplée mécaniquement au pointeur et l'autre extrémité est couplée mécaniquement à l'embase de façon à générer un couple aux extrémités du ressort à lame afin de déformer ledit ressort à lame en cas de déviation du pointeur, les faces planes du ressort à lame étant orientées sensiblement dans le sens transversal par rapport au plan principal.

6. Sonde selon la revendication 5 et l'une au moins des revendications 3 et 4, dans laquelle l'une au moins des jauges de contrainte est placée sur l'une au moins desdites faces étroites afin de déterminer ladite déformation du ressort à lame en fonctionnement.

7. Sonde selon la revendication 6, dans laquelle au moins une première jauge de contrainte parmi ladite au moins une jauge de contrainte est placée sur ladite au moins une face étroite, ladite au moins une première jauge de contrainte étant située en majeure partie en dehors de la ligne médiane dans le sens longitudinal de la face étroite, afin de déterminer une déformation du ressort à lame dans une direction perpendiculaire à la face plane du ressort à lame.

8. Sonde selon la revendication 7, dans laquelle au moins une première jauge de contrainte est placée des deux côtés de la ligne médiane de la face étroite afin de déterminer la grandeur et le sens de la déformation du ressort à lame.

9. Sonde selon la revendication 8, dans laquelle la face étroite a une forme sensiblement rectangulaire et dans laquelle au moins une jauge de contrainte est montée des deux côtés de la ligne médiane dans une direction longitudinale de sa face étroite et des deux côtés de la ligne médiane dans le sens latéral de sa face étroite, de façon qu'il y ait au moins une jauge de contrainte dans chaque quadrant de la face étroite.

10. Sonde selon l'une des revendications 6 à 9, dans laquelle au moins une deuxième jauge de contrainte est placée sur la face étroite afin de déterminer une déformation du ressort à lame dans une direction perpendiculaire à la face plane du ressort à lame.

11. Sonde selon l'une des revendications 3 à 10, dans lequel l'une au moins des jauges de contrainte est incorporée dans un pont de Wheatstone.

12. Sonde selon l'une des revendications précédentes, dans laquelle les jauges de contrainte sont reliées électriquement à des moyens de mesures servant à déterminer une propriété électrique des jauges de contrainte.

13. Sonde selon la revendication 12, dans laquelle les moyens de mesures sont reliés à des moyens de contrôle servant à déterminer la grandeur et/ou le sens de la déviation du point de mesure par rapport à une position d'équilibre de ce point.

14. Sonde selon l'une des revendications précédentes, dans laquelle le pointeur est suspendu à l'embase par le biais d'au moins deux éléments flexibles afin de permettre la détermination de la déviation du point de mesure en trois dimensions.
